Europäisches Patentamt

European Patent Office

Office européen des brevets

(11) Publication number: 0 217 482
A1

# EUROPEAN PATENT APPLICATION

(21) Application number: 86301932.9

(51) Int. Cl.⁴: **B01D 27/06** , B01D 13/00

(22) Date of filing: 17.03.86

(30) Priority: 19.07.85 US 757217

(43) Date of publication of application:
08.04.87 Bulletin 87/15

(84) Designated Contracting States:
AT BE CH DE FR GB IT LI LU NL SE

(71) Applicant: HR TEXTRON INC.
25200 West Rye Canyon Road
Valencia, CA 91355(US)

(72) Inventor: Bilicich, Louis A.
28361 Winterdale Drive
Canyon Country California 91351(US)
Inventor: Kaplan, Stephen J.
4420 Cezanne Avenue
Woodland Hills California 91364(US)
Inventor: Flaherty, James E.
12231 Hartland Street
North Hollywood California 91350(US)
Inventor: Lukaszewicz, Raymond C.
20610 Alaminos Drive
Saugus California 91350(US)

(74) Representative: Newstead, Michael John et al
Page & Co. Temple Gate House Temple Gate
Bristol BS1 6PL(GB)

(54) Filter element.

(57) A filter element constructed entirely of compo-
nents fabricated from fluoropolymers including a fil-
ter media (12) constructed of a non-thermoplastic
fluorocarbon resin material. The filter element in-
cludes a core member (10) over which there is
disposed a filter media (12), the end edges of which
are melt flow bonded to a pair of end caps (18,20).
An outer protective sleeve (24) may be incorporated
to protect the filter media (12) from potential dam-
age. The filter media (21) includes a fluorocarbon
resin membrane (14) and one or more screens -
(15,16) which may or may not be laminated together.

FIG. I

## FILTER ELEMENT

REFERENCE TO RELATED APPLICATIONS

This application is a continuation-in-part application of Serial No. 06/649,008, filed September 10, 1984 for FILTER ELEMENT.

BACKGROUND OF THE INVENTION

In many manufacturing processes it has been found desirable to utilize filter elements in the presence of highly reactive chemicals such as sulphuric acid, nitric acid, chromic acid, hydrochloric acid, hydrofluoric acid, sodium hypochlorite and the like, sometimes at relatively high temperatures. Such highly reactive chemicals attack most known prior art filter elements, particularly those utilizing solvents or adhesives in the manufacture of the elements. As a result, the prior art filter elements either cannot be used or have a relatively short lifetime due to chemical attack and must be replaced fairly frequently, thus adding to the cost of the manufacturing process.

Components fabricated from fluoropolymer and particularly fluorocarbon resins have unique combinations of physical and chemical properties which make them particularly useful in such hostile environments as those of filtering reactive chemicals even at elevated temperatures.

Various efforts have been made to construct filter elements using such components including those fabricated from fluorocarbon resins which will withstand such highly reactive chemicals and the best known art is represented by U.S. Patents 3,457,339; 2,732,031; 2,772,256; 2,773,781; 2,789,063; 2,934,791; 2,941,620; 3,013,607, 3,867,294, 4,033,881; 4,154,688 and 4,284,966. However, to applicants' knowledge, the prior art has not been successful in constructing a completely sealed filter element entirely of components fabricated exclusively from fluoropolymers including a fluorocarbon resin.

By the term "fluorocarbon resin" as used throughout the specification and claims it is meant a polymer wherein the external bonds of the carbon atoms have adhered thereto an atom of fluorine. Typical examples of such fluorocarbon resins is a polymer consisting of recurring tetrafluoroethylene monomer units whose formula is:

$$[CF_2\text{-}CF_2]_n$$

commonly referred to as "PTFE"; a copolymer of tetrafluoroethylene and hexafluoropropylene with the formula:

$$[CF(CF_3)\text{-}CF_2(CF_2\text{-}CF_2)_n]_m$$

commonly referred to as "FEP"; and a copolymer of tetrafluoroethylene and perfluoronated vinyl ether having the formula:

$$[CF(OR_f)\text{-}CF_2(CF_2\text{-}CF_2)_n]_m$$

commonly referred to as "PFA".

SUMMARY OF THE INVENTION

A filter element constructed exclusively of components fabricated from fluoropolymers including a fluorocarbon resin which includes a perforate core member having positioned thereover a filter media including a fluorocarbon resin membrane. The end edges of the fluorocarbon resin filter media are closed and are melt flow bonded to a pair of end caps.

The method of making a filter element of fluoropolymer and fluorocarbon resin components which includes impregnating and heat sealing the side and end edges of a fluorocarbon resin filter media, pleating the filter media, filling the interstices between the pleats with a fluorocarbon resin material which is bonded to the filter media and thereafter melt flow bonding the end edges to the end caps.

DESCRIPTION OF THE DRAWINGS

FIGURE 1 is a composite isometric view, partially broken away, illustrating a filter element constructed in accordance with the principles of the present invention;

FIGURE 2 is a schematic diagram illustrating one of the steps in the manufacture of the filter element;

FIGURE 3 is a schematic diagram of a fragmented portion of the filter media after the step illustrated in FIGURE 2 has been performed;

FIGURES 4 and 5 illustrate a manner of seaming the side edge of a filter media constructed in accordance with the present invention;

FIGURE 6 is a schematic diagram of an additional step in the fabrication of a filter element constructed in accordance with the present invention; and

FIGURE 7 is a schematic diagram illustrating the bonding of an end cap to the closed end of the filter media.

## DETAILED DESCRIPTION OF THE INVENTION

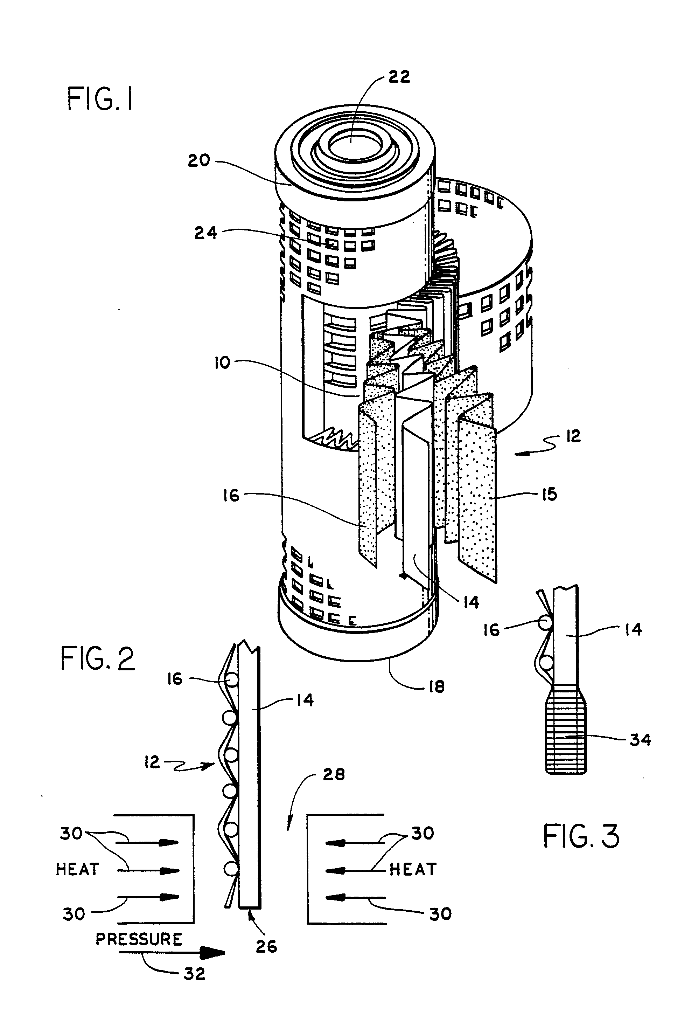

By utilization of a filter element constructed entirely of components fabricated from fluoropolymers and particularly from fluorocarbon resins almost unlimited chemical resistance can be obtained from filter elements even in highly aggresive and hostile environments which normally limit the life of such filter elements. Such a filter element is illustrated in FIGURE 1 and is constructed in accordance with the principles of the present invention. As is therein shown a perforate support core 10 is constructed of a fluorocarbon resin and is utilized to support the filter media shown generally at 12. The filter media 12 is constructed of a filter membrane 14 which may or may not be laminated with a support screen 16. As an alternative embodiment an additional support screen 15 may be placed on the opposite side of the membrane 14 and may or may not be laminated thereto to assist in handling the membrane during processing steps to form the pleated media. The membrane 14 is preferably constructed of an expanded amorphous-locked fluorocarbon resin, such for example as polytetrafluoroethylene, and may, for example, be of the type as disclosed in U.S. Patent 3,953,566 the disclosure of which is incorporated herein by reference. Alternatively the filter media may be fabricated from floculated PTFE filter paper having pore sizes in the ranges required for the particular application. In any event the fluorocarbon resin membrane 14 is fabricated from porous PTFE or other porous fluorocarbon resin membrane of uniform porosity and separates very small particles from the filtrant and, for example, can have a rating of from .01 to 10 microns. On the other hand, the screen 16, as well as the screen 15 (if used), merely provide a mechanical support for the membrane 14 and have relatively large openings therein which do not inhibit the flow of the filtrant.

The filter media 12 is secured between a pair of end caps 18 and 20 one or both of which may have an opening such as shown at 22 to provide for the flow of the filtrant which typically flows from outside in as is well known to those skilled in the art. The filter media 12 must be firmly secured to the end caps 18 and 20 in such a manner that a fluid tight seal of high strength is obtained to prevent any bypass of the material being filtered while maintaining the integrity of the bubble point of the media. As is shown in FIGURE 1 the filter media 12 typically is pleated prior to being bonded to the end caps 18 and 20 but such is not required.

A perforate outer protective sleeve 24 fabricated from a fluorocarbon resin is positioned over the filter media 12 to protect it from damage both from handling and also in the event a back pressure occurs from backflushing or an accidental surge or the like. If desired, the outer sleeve may be elminated.

The filter element as illustrated in FIGURE 1 is preferably constructed from components fabricated entirely of fluorocarbon resins. As a result thereof, the filter element can withstand attacks by highly reactive chemical materials of the type above referred to.

One of the major difficulties encountered in attempting to construct a filter element of components fabricated from all fluorocarbon resins has been forming the longitudinal seam on the media 12, sealing the end edges of the fluorocarbon resin filter media 12 and bonding the filter media 12 to the end caps. Applicants have found that by utilizing the material as above described and by choosing a screen material 16 (or a separate layer along the end edge) having a melting point slightly lower than the gel point (not a true melting point) of the membrane material 14 and then by subjecting the end edges of the media 12 to appropriate heat and pressure of sufficient magnitude to melt selectively the end edge of the screen portion 16 it will flow through the pores of the membrane 14 and effectively encapsulate the same. Such is illustrated - schematically in FIGURE 2 to which reference is hereby made.

Preferably the membrane 14 is fabricated from a polytetrafluoroethylene fluorocarbon resin - (PTFE) which has been layered with a screen 16 fabricated from a copolymer of tetra-fluoroethylene and hexafluoropropylene fluorocarbon resins (FEP) or a copolymer of tetrafluoroethylene and perfluoronated vinyl ether (PFA). By placing the end edge 26 of the media 12 between the surfaces of an anvil member 28 which is heated as is shown by the arrows 30 and by applying appropriate pressure as is illustrated by the arrow 32, the FEP melts and impregnates the pores of the PTFE membrane as is shown in FIGURE 3 at 34.

Alternatively a layer or strip of FEP or PFA material may be placed along the end edge 26 of the media membrane 14 prior to application of the heat and pressure thereto. Through this technique the end edges of the PTFE are impregnated and laminated with a melt flow fluorocarbon resin material, that is, a thermoplastic material as shown at 34. Prior attempts to use the PTFE membrane for a filter media where a fluid tight seal is required have been unsuccessful because the PTFE is not a thermoplastic material and when raised to a high temperature turns into a gel and upon cooling shrinks and loses its bubble point integrity rendering it useless as a filter. By impregnating and laminating the end edges of the PTFE membrane as above described, the FEP or PFA melt flow and impregnate and laminate the PTFE without damaging the PTFE membrane in any manner. If the FEP or PFA layer is between 1 and 2 mils thick, the impregnating and laminating can be accomplished at a temperature of 700°F with a pressure of 185 p.s.i. for 2.25 seconds. It has been found that for thicknesses of the thermoplastic material of between 1 to 4 mils that temperatures between 525° and 750°F with pressures between 50 and 400 p.s.i. for times between 1 to 4 seconds will produce good results.

Although PFA and FEP are preferable for the melt flow materials, other fluoropolymers may be used, with appropriate modifications of the above parameters as required, for example, ETFE (ethylene-tetrafluoroethylene copolymer), ECTFE (ethylene-chlorotrifluoroethylene copolymer), CTFE (chlorotrifluoroethylene copolymer), TFA (a fluorocarbon which is equivalent to PFA and which is manufactured by Hoechst GmbH and sold under the trademark "Hostaflon") and EPE (equivalent to PFA and manufactured by Matsui Fluorochemicals in Japan).

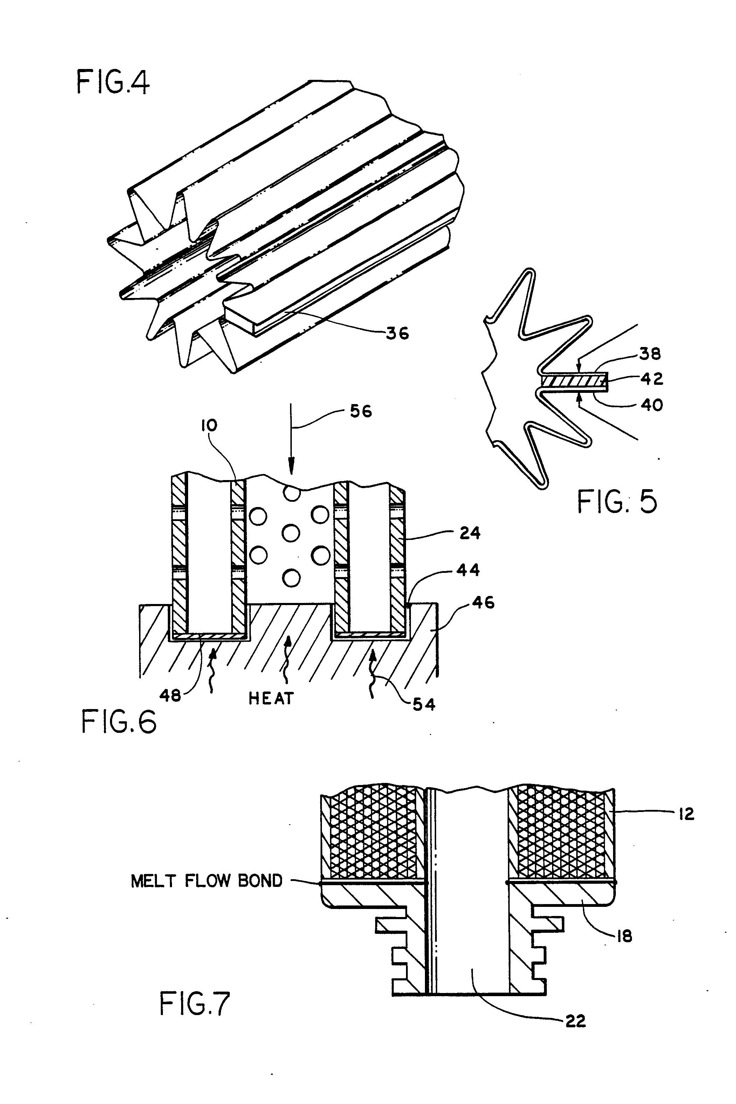

As is well known to those skilled in the art and as above referred to, the filter media is appropriately pleated and an edge thereof is seamed which is further illustrated in FIGURES 4 and 5. As is shown, the edge 36 of the pleated media has been seamed to provide a seal along the entire length of the filter media. The seal along the edge 36 is also fluid tight and must not degrade the bubble point of the filter media. Preferably the seam seal is formed by first sealing the edges as above described with respect to the end edges and then melt flow bonding the sealed edges together. In this fashion the melt flow material first impregnates and laminates the PTFE membrane and thereafter melt flow bonds to itself without degrading the PTFE membrane. Preferably a 1 to 2 mil thick strip of FEP or PFA material is laminated to the PTFE membrane by heating to 550°F at a pressure of 143 p.s.i. for 3 seconds. Thereafter the laminated edges are bonded together at 590°F at 143 p.s.i. for 3 seconds. The temperature, time, pressure and thickness ranges above described are applicable to this side seam seal formation. In addition the fluoropolymers above referred to may be substituted for the FEP or PFA if desired where an all fluorocarbon resin filter element is not required. It must be recognized that a melt flow material must be laminated to the PTFE membrane to effect the desired longitudinal seam. The PTFE membrane cannot be sealed to itself without raising the PTFE beyond its gel temperature which would cause the membrane to shrink upon cooling thereby destroying its bubble point integrity.

After the appropriate heat sealing of the end edges and the seam as above described the pleated edges of the media are appropriately closed and thereafter secured and bonded to each of the end caps 18 and 20. Alternatively, the end caps may be bonded to the media simultaneously with the closing thereof.

By reference now to FIGURE 6, there is illustrated the manner by which the ends of the pleated fluorocarbon resin media are closed. As is therein shown a release agent 44 is applied to the recessed annular surface of a heated mold 46. An annulus 48 of FEP material is placed within a space defined by the recessed annular mold 46. Thereafter the pleated filter media 12 disposed between the inner core 10 and the outer guard 24 is placed in contact with the annulus 48. Heat is applied as shown by arrows 54 in an amount sufficient to melt the annulus 48 and part of the base of the mesh pack. A pressure as shown by arrow 56 is applied to the top of the filter media assembly. The pressure may be applied during the entire heating step. The pressure along with the molten annulus causes the molten fluorocarbon resin material to flow between and close off the ends of the pleated media and to completely seal the same. Alternatively, the screen 16 may be extended beyond the end edge of the pleated media and such extension may be substituted for the annulus 48.

It has been found that the annulus 48 may take any form desired in that it may be a single or several layers, granular or powdered (that is, the FEP or PFA may be pulverized) in form or a combination thereof. It has also been found that the annulus may be FEP or PFA or other of the melt flow fluoropolymers, PTFE will not work. Furthermore, the end edges of the filter media may not require sealing as above described although such is considered the preferred embodiment.

The heat should be applied for a time and at a temperature to render the annulus 48 of FEP or PFA molten. It has been found that a temperature of from approximately 520°F to 650°F for a time of at least approximately 1 minute is sufficient. Also, a pressure of at least approximately one pound per square inch has been found preferable depending upon the time it is applied. Such has been found not to be critical with the main criteria being to insure that the annulus material totally encapsulates the membrane material to effect a complete seal of the end of the pleated media.

The release layer 44, if needed, may be any material that will not stick to the media or the retainer members. One such material is a thermoset polyimide sold under the name Kapton type H which is a trademark of E. I. duPont de Nemours & Co. Inc. Each end of the filter media is similarly treated to close it off. Subsequently the end caps 18 and 20 are secured to the closed ends of the filter media.

For purposes of illustration an end cap 18 is shown in cross section in FIGURE 7 with the pleated filter media 12 treated as above described positioned in place thereon during the melt flow bonding of the end cap thereto as required for construction of a filter element in accordance with the present invention. The end cap 18 as is shown in FIGURE 7 is preferably fabricated from FEP or PFA fluorocarbon resin. The end cap is basically hat-shaped as is illustrated in FIGURE 7 and as also shown in FIGURE 1 may, if desired, have a centrally disposed opening as shown at 22.

The end cap 18 and the sealed end of the pleated filter media are each heated by application of energy thereto and at a temperature of 650°F for a time sufficient to render the opposed surfaces thereof (as shown in FIGURE 7) molten, one minute after the surfaces reach 650°F. The opposed surfaces are then brought into contact at a pressure of 1 p.s.i. and the molten material allowed to cool. In this manner the end cap fitting is melt flow bonded to the filter media to complete the filter element. The melt flow bonding of the end caps to the ends of the pleated media may be accomplished at a temperature range of 525° to 700°F at a pressure of 1/2 to 4 p.s.i. for a time of 1/2 to 5 minutes subsequent to the time the edges reach the prescribed temperature.

It will also be recognized by those skilled in the art and particularly with reference to FIGURE 1 that at the same time the filter media 12 is bonded to the end caps the support tube 10 and the protective sleeve 24 may also be melt flow bonded to the end caps in like manner. It will also, however, be recognized that there is no necessity for such bonding to occur since the support tube and the protective sleeve only provide a mechanical support and protection for the filter media 12 and need not be bonded. The only requirement is that the filter media 12 be securely and permanently bonded to the end caps to preclude and possibility of leakage of the material being filtered thereby contaminating the filtrant. Through the utilization of the melt flow materials along the end and side edges of the PTFE membrane excellent fluid tight seals are obtained while maintaining the bubble point integrity of the PTFE membrane filter media. As a result there is provided a fluorocarbon resin membrane filter media in a filter element which may be constructed of all fluoropolymers that does not compromise the bubble point of the filter media.

## Claims

1. A completely sealed filter element constructed exclusively of components fabricated from fluoropolymers comprising:

a perforate support core member;

a filter media including a fluorocarbon resin porous membrane disposed upon said support core member and having first and second end edges; and

first and second end caps melt flow bonded to said first and second end edges of said membrane respectively without degradation of the bubble point of said membrane.

2. The filter element as defined in claim 1 wherein said filter media includes a plurality of layers of fluorocarbon resin material and wherein said end edges of said media are first heat sealed prior to melt flow bonding said end caps to said media.

3. The filter element as defined in claim 1 wherein said filter media is pleated and formed into a tube and contiguous edges thereof are first melt flow bonded together prior to melt flow bonding said end caps to said media.

4. The filter element as defined in claim 1 which further includes an outer fluorocarbon resin perforate protective sleeve disposed over said filter media.

5. The filter element as defined in claim 4 wherein said inner support core and said protective sleeve are each melt flow bonded to each of said end caps.

6. The filter element as defined in claim 2 wherein said media includes a screen of fluorocarbon resin material laminated with said membrane fluorocarbon resin member.

7. The filter element as defined in claim 6 wherein said screen extends through pores in said membrane along said heat sealed end edges.

8. The filter element as defined in claim 5 wherein said filter media is pleated and wherein said media includes a membrane fluorocarbon resin member having a screen of fluorocarbon resin material disposed contiguous therewith, a layer of fluorocarbon resin material impregnated and laminated along said end edges and along adjacent side edges and effectively encapsulates said membrane along said side and end edges.

9. The filter element as defined in claim 8 wherein said screen material is a different fluorocarbon resin material than said membrane material.

10. The filter element as defined in claim 9 wherein a portion of said screen material is laminated with said membrane material along said end edges thereof.

11. The filter element as defined in claim 9 wherein said end caps and said screen material are constructed of the same fluorocarbon resin material.

12. The filter element as defined in claim 9 wherein said end caps and said screen material are constructed of a different fluorocarbon resin material.

13. A completely sealed filter element constructed exclusively of components fabricated from fluorocarbon resins comprising:

a tubular filter media including a PTFE porous membrame having first and second end edges and a longitudinal side edge seam;

a thermoplastic fluorocarbon resin material laminated to said end edges and said longitudinal seam of said PTFE membrane, said longitudinal seam being melt flow bonded to effect a continuous seal therealong;

first and second end caps of thermoplastic fluorocarbon resin material melt flow bonded to said end edges of said PTFE membrane to effect a continuous seal therealong, the bubble point of said PTFE membrane being not less than bubble point before and after said melt flow bonding of said end caps thereto.

14. A filter element as defined in claim 13 wherein said fluorocarbon resin material laminated to said edges is FEP.

15. A filter element as defined in claim 13 wherein said fluorocarbon resin material laminated to said edges is PFA.

16. A filter element as defined in claim 13 which further includes a fluorocarbon resin screen disposed contiguous with and not laminated with said membrane other than along said edges.

17. A filter element as defined in claim 16 further including a perforate support core member, said filter media being disposed upon and internally receiving said support core.

18. A filter element as defined in claim 17 which further includes an outer perforate protective sleeve disposed over said filter media.

19. A filter element as defined in claim .18 wherein said support core member and said outer sleeve are each melt flow bonded to said end caps.

20. A filter element as defined in claim 19 wherein said screen is laminated with said membrane.

21. The method of manufacturing a filter element constructed exclusively of components fabricated from fluorocarbon resins and having a filter media bonded at its opposite end edges to a pair of end caps, said media having a screen and a non-thermoplastic porous membrane, said method comprising the steps of:

providing a layer of thermoplastic fluorocarbon resin material to said edge;

applying heat and pressure to the end edges of said filter media and said layer for a time and at a temperature sufficient to melt said layer and to allow said layer to impregnate and melt flow bond with said membrane;

applying heat to said end cap for a time and at a temperature sufficient to preferentially melt a surface of said fluorocarbon resin end cap;

inserting said end edges of said filter media into said end cap molten fluorocarbon resin material; and

cooling said end cap and end edges to solidify said molten material and melt flow bond said filter media to said end cap.

22. The method as defines in claim 14 which further includes the steps of providing a layer of thermoplastic fluorocarbon material contiguous with side edges of said membrane, and applying heat and pressure to the side edges of said membrane for a time and at a temperature to melt said layer and laminate said layer to said membrane, pleating said filter media, forming said media into a cylinder, bringing said side edges together in contiguous relationship, applying heat and pressure to said contiguous side edges for a time and at a temperature sufficient to melt flow bond said side edges together and effect a fluid tight seal therealong before bonding said media to said end caps.

23. The method of claim 22 wherein each of said layers of material is between 1 and 4 mils thick, said temperature is between 525° and 750°F, said time is between 1 and 4 seconds and further includes application of pressure between 50 and 400 p.s.i.

FIG.1

FIG.2

FIG.3

FIG.4

36

38
42
40

FIG. 5

56

10

24

44

46

48      HEAT      54

FIG.6

12

MELT FLOW BOND

18

22

FIG.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| E | EP-A-0 175 432 (HR TEXTRON INC.)(Publ. 26-03-1986) * Whole document * & US-A-649 008 (1984) (Cat. D) | 1-23 | B 01 D 27/06 B 01 D 13/00 B 01 D 39/16 |
| X | EP-A-0 139 822 (KURASHIKI BOSEKI K.K.) * Abstract; claims 1-11; figures 1-4; page 4, line 1 - page 13, line 15 * | 1-23 | |
| X | DE-A-3 444 387 (HR TEXTRON INC.) * Abstract; figures 1-10; claims 1,2,9-21; page 9, line 6 - page 13, line 15 * & GB-A-2 152 399 | 1-23 | |
| E | EP-A-0 187 358 (KURASHIKI BOSEKI K.K.)(Publ. 16-07-1986) * Abstract; figures 1-7; claims 1-9,11,17; page 13, line 14 - page 19, line 4 * | 1,3-6, 8,9,11 ,13-23 | **TECHNICAL FIELDS SEARCHED (Int. Cl.4)** B 01 D |

The present search report has been drawn up for all claims

| Place of search | Date of completion of the search | Examiner |
|---|---|---|
| THE HAGUE | 05-12-1986 | HOORNAERT P.G.R.J. |